(19) Europäisches Patentamt
European Patent Office
Office européen des brevets

(11) EP 2 363 827 B1

(12) **EUROPEAN PATENT SPECIFICATION**

(45) Date of publication and mention
of the grant of the patent:
**10.10.2012 Bulletin 2012/41**

(51) Int Cl.:
***G06K 9/00*** *(2006.01)*

(21) Application number: **10002244.1**

(22) Date of filing: **04.03.2010**

(54) **Method and device for classifying a traffic sign**

Verfahren und Vorrichtung zur Klassifizierung eines Verkehrszeichens

Procédé et dispositif pour classifier un panneau de signalisation routière

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(43) Date of publication of application:
**07.09.2011 Bulletin 2011/36**

(73) Proprietor: **Harman Becker Automotive Systems GmbH**
**76307 Karlsbad (DE)**

(72) Inventors:
• **Natroshvili, Koba**
**76337 Waldbronn (DE)**
• **Mani, Ayyappan**
**76131 Karlsruhe (DE)**

(74) Representative: **Bertsch, Florian Oliver et al**
**Kraus & Weisert**
**Patent- und Rechtsanwälte**
**Thomas-Wimmer-Ring 15**
**80539 München (DE)**

(56) References cited:
• ACH R ET AL: "Classification of traffic signs in real-time on a multi-core processor" INTELLIGENT VEHICLES SYMPOSIUM, 2008 IEEE, IEEE, PISCATAWAY, NJ, USA, 4 June 2008 (2008-06-04), pages 313-318, XP031318852 ISBN: 978-1-4244-2568-6

• MARCIN L EICHNER ET AL: "Integrated speed limit detection and recognition from real-time video" INTELLIGENT VEHICLES SYMPOSIUM, 2008 IEEE, IEEE, PISCATAWAY, NJ, USA, 4 June 2008 (2008-06-04), pages 626-631, XP031318930 ISBN: 978-1-4244-2568-6

• "10.1 Linearly Symmetric Images" In: JOSEF BIGUN: "Vision with Direction - A systematic Introduction to Image Processing and Computer Vision" 1 January 2006 (2006-01-01), Springer-Verlag Berlin Heidelberg , XP002593305 ISBN: 978-3-540-27322-6 , pages 153-163 * page 154, last paragraph - page 155, paragraph 2 * * page 156 - page 159; examples 10.1-10.3 * * figures 10.2,10.4-10.8 * * lemma 10.1; page 161 - page 162; example 10.5 * * page 162, last paragraph - page 163, line 3 *

• "8.6 Depth from Multiple Projections: Tomography" In: JAHNE B: "Digital image processing - 5th revised an extended edition" 1 January 2002 (2002-01-01), Springer-Verlag Berlin Heidelberg , XP002593306 ISBN: 3-540-67754-2 , pages 224-231 * ch. 8.6.2 Radon Transform and Fourier Slice Theorem; page 225 - page 227 *

• Pérez E et al.: "Image Processing Techinques for Automatic Road Sign Identification and Tracking" In: Javidi B: "Image Recognition and Classification - Algorithms, Systems, and Applications", 2002, Marcel Dekker Inc., New York, US ISBN: 0824707834 pages 403-426, * the whole document *

EP 2 363 827 B1

## Description

The invention relates to a method of and a device for classifying a traffic sign. In particular, the invention relates to a method and device that are configured to establish whether a traffic sign includes one or plural stripes extending linearly on the traffic sign.

Related Art

Contemporary vehicles are equipped with various different sensors. Vehicle sensors include sensors for detecting variables that are related to the status of the vehicle itself, as well as sensors for detecting variables of the environment of the vehicle. Sensors of the second type include temperature sensors, distance sensors and, more recently, also one or several cameras.

A vehicle can be equipped with a single or a plurality of cameras mounted at different positions and configured to monitor the environment of the vehicle. Such cameras may be specifically designed to capture images of a certain sector of a vehicle's environment. Data obtained from the camera(s) are employed for a variety of purposes. A basic class of functions, for which image data captured by a camera may be employed, is the field of driver assistance systems. Driver assistance systems cover a large range of functions. Systems exist that provide a driver with particular information, for example a warning in the case of possible emergency situations inside or outside the vehicle. Other driver assistance systems further enhance a driver's comfort by interfering with or partly taking over control functions in complicated or critical driving situations. Examples for the latter class of driver assistance systems are antilock brake systems (ABS), traction control systems (PCS), and electronic stability programs (ESP). Further systems include adaptive cruise control, intelligent speed adaptation and predictive safety systems.

Some functions in Advanced Driver Assistance Systems (ADAS) may be based on an automatic recognition of traffic signs, which allows a traffic sign included in image data captured by a camera to be automatically recognized. For illustration, based on the information available from speed limit signs and end-of-restriction signs, additional support functions could be provided to enhance the driver's comfort. Such support functions may include the outputting of a warning when a speed limit violation occurs, implementing automatic adjustments to vehicle setting responsive to the detected speed limit or other assistance functions. While information on traffic signs may be included in digital map data stored onboard a vehicle, frequent updates of the map data may be required to keep the traffic sign information up to date. Further, such information on traffic signs may not be adapted to accommodate traffic signs that are set up only for a limited period of time, e.g. in the case of road construction work. Therefore, the provision of digital map data which includes information on traffic signs does not obviate the need for methods and devices for classifying traffic signs. Furthermore, if the digital map data are generated at least partially based on recorded video images or similar, traffic sign classification may need to be performed in the process of generating the digital map data.

Methods for recognizing traffic signs may employ, for example, classification methods based on an Adaboost algorithm, neural networks or support vector machines (SVM). While classification may lead to a full identification of the traffic sign, classification may also be implemented such that it established whether a traffic sign belongs to one of several classes of traffic signs. For some functions in ADAS that rely on the automatic recognition of traffic signs, the time required for classifying a traffic sign may be critical. Further, for some functions in ADAS that rely on the automatic recognition of traffic signs, false positive detections, i.e. classifications in which a traffic sign is incorrectly classified as belonging to a given class of traffic signs, should be low.

R. Ach et al., "Classification of Traffic Signs in Real-Time on a Multi-Core Processor", Intelligent Vehicles Symposium, 2008 IEEE, IEEE, Piscataway, NJ, USA, pages 313-318, which serves as basis for the preamble of the independent claims, describes a neural network approach to traffic sign classification. Two separate neural networks are trained for restriction signs and their associated abolishment signs. R. Ach et al. also mentions that a previous assignment of a traffic sign to one of the two classes is required prior to inputting the traffic sign to one of the neural networks.

Josef Bigun, "Vision with Direction - A systematic Introduction to Image Processing and Computer Vision", Springer-Verlag Berlin Heidelberg, 2006 describes, in chapter "10.1 Linearly Symmetric Images" methods of identifying whether an image is a linearly symmetric image. The methods employ a 2D Fourier transform. It is suggested that the vanishing of the spectral weight outside of a line may serve as an indication of whether or not the image is linearly symmetric.

The book chapter by Elisabet Pérez and Bahram Javidi, "Image Processing Techniques for Automatic Road Sign Identification and Tracking" in Bahram Javidi (Ed.), "Image Recognition and Classification - Algorithms, Systems, and Applications", pages 403-426, Marcel Dekker Inc., New York, US, 2002 (ISBN: 0-8247-0783-4) describes the use of domain knowledge and filtering in the Fourier domain for detection of speed limit signs.

Therefore, there is a need in the art for improved methods and devices for classifying a traffic sign. In particular, there is a need in the art for a method and device for classifying a traffic sign, which is configured to reliably establish whether a traffic sign has one or plural stripes extending essentially linearly on the traffic sign. There is further a need in the art for such a method and device which is adapted to classify a traffic sign having one or plural stripes in its interior in a short time.

Summary

According to the invention, this need is addressed by a method and device as defined in the independent claims. The dependent claims define preferred or advantageous embodiments.

According to one aspect of the present invention, a method of classifying a traffic sign which includes establishing whether the traffic sign has at least one graphical feature extending linearly on the traffic sign is provided. The at least one graphical feature extending linearly on the traffic sign may for example be one or plural lines or stripes extending linearly on the traffic sign. In the method, a portion of image data representing at least a portion of the traffic sign is identified. A two-dimensional spectral representation of the portion of the image data is calculated. Coefficients of the two-dimensional spectral representation are determined for Fourier space coordinates disposed along a line in Fourier space, the line having a selected direction in Fourier space. Based on the determined coefficients, it is established whether the traffic sign has the at least one graphical feature extending linearly on the traffic sign.

In this method, information included in the spectral representation of the portion of the image data is utilized to establish whether the traffic sign has at least one graphical feature extending linearly on the traffic sign. The portion of the image data has, for a plurality of positions that are identified by a first image coordinate and by a second image coordinate, respectively a value that may correspond to a colour or brightness information associated with the pair of image coordinate. For illustration, each pair of image coordinates of the portion of the image data may have a greyscale value associated with it. The portion of the image data may thus be considered to represent a two-dimensional function of the first and second image coordinates. A two-dimensional spectral representation may be calculated for the portion of the image data. Coefficients of a spectral representation are feature attributes of an image that may be utilized in image recognition and that may be calculated using efficient algorithms.

As used herein, and in accordance with the terminology in the art of image recognition, a two-dimensional spectral representation of the image data provides the coefficients of a series expansion of the two-dimensional image data, when interpreted as a two-dimensional function, in orthonormal basis functions. The orthonormal basis functions may be such that they respectively vary periodically as a function of the image coordinates with a well-defined spatial frequency. Examples for two-dimensional spectral representations include two-dimensional Fourier transforms, two-dimensional cosine transforms, and two-dimensional sine transforms, it being understood that there are discrete and continuous variants of such transforms and that the transforms may be numerically calculated using various algorithms, such as fast Fourier transforms (FFT) or other efficient algorithms.

Further, as used herein, and in accordance with the terminology in the art of image recognition, the term Fourier space refers to a space having coordinates that correspond to spatial frequencies of the orthonormal basis functions in which the series expansion of the image data is calculated. The term Fourier space does not imply that the two-dimensional spectral representation has to be a Fourier transform of the portion of the image data, but equally refers to a space having coordinates that correspond to spatial frequencies of the orthonormal basis functions in which the series expansion of the image data is calculated when the orthonormal basis functions are, for example, cosine functions or sine functions. Sometimes, the Fourier space is also referred to as k-space in the art of image recognition. For illustration, a pair of coordinates $k_1$, $k_2$ in Fourier space is associated with a basis function of the spectral decomposition having a first spatial frequency along a first image coordinate axis $x_1$ that is determined by $k_1$, and having a second spatial frequency along a second image coordinate axis $x_2$ that is determined by $k_2$. For illustration rather than limitation, the basis function associated with the pair of coordinates $k_1$, $k_2$ in Fourier space may be the product of a cosine varying as a function of $k_1 \cdot x_1 \cdot \pi/N_1$ and a cosine varying as a function of $k_2 \cdot x_2 \cdot \pi/N_2$, where $N_1$ and $N_2$ denote the total number of image points along the $x_1$- and $x_2$-directions, respectively. Coefficients of the spectral representation evaluated along a line in Fourier space may be the set of coefficients $U(k_1, k_2)$ of the spectral representation with $k_1$ and $k_2$ disposed along a line in Fourier space.

In the method, the direction of the line in Fourier space along which the coefficients of the two-dimensional spectral representation are determined may be selected based on a direction along which the at least one graphical feature, if present, extends on the traffic sign. Various traffic signs, such as end of restriction signs in Germany, have graphical features that extend linearly in a specific direction (e.g., five stripes extending at an angle of 45° from the positive horizontal direction on an end-of-restriction sign in Germany). By selecting the direction of the line in Fourier space based on the a priori known possible directions of graphical features on traffic signs, the detection sensitivity may be selectively enhanced for traffic signs having graphical features extending linearly along a given direction.

In the method, selecting the direction of the line in Fourier space may for example be performed as follows. If it is intended to establish whether a traffic sign has a graphical feature extending in a direction that has an angle of $\alpha$ relative to a first direction in image space, the angle $\alpha$ is a priori known. For illustration, the angle $\alpha$ may be the angle enclosed by the first image space coordinate axis and the portion of the linearly extending graphical feature that is located in quadrants I and IV of the image coordinate system. Then, the direction of the line in Fourier space may be selected such that it encloses an angle of β relative to a first direction in Fourier space. For illustration, the angle β may be the angle enclosed by the first Fourier space coordinate axis and the portion of the line in Fourier space that is located in quadrants I and IV of the Fourier coordinate system. The direction of the line in Fourier space may be the be selected such that $85° \le |\beta-\alpha| \le 95°$, in particular such that $88° \le |\beta-\alpha| \le 92°$, in particular such that $89° \le |\beta-\alpha| \le 91°$. In other words, the direction of the line in Fourier space may be selected such that it is orthogonal, to within $\pm 5°$, to the direction along which the graphical feature, if present, extends on the traffic sign in image space. Thereby, the sensitivity in recognizing traffic signs having linearly extending graphical features disposed along a specific direction may be enhanced..

In the method, the coefficients of the two-dimensional spectral representation may be determined for Fourier space coordinates disposed along a line in Fourier space which passes through the point in Fourier space associated with a basis function of the spectral decomposition which exhibits a slow spatial variation in image space, for example, a constant function. Depending on the specific implementation of the transform from image space to Fourier space, the line may be selected to pass, e.g., through $(k_1, k_2)=(o,o)$, through $(k_1, k_2)=(o,N_2{-}_1)$, through $(k_1, k_2)=(N_1{-}_1, o)$ or similar. Thereby, the determined coefficients of the two-dimensional spectral representation along the line in Fourier space may be indicative of line integrals taken over the portion of the image data. Such line integrals may exhibit pronounced features, e.g., pronounced peaks or dips, where there are linearly extending graphical features on the traffic sign.

In the method, a two-dimensional discrete cosine transform, a two-dimensional discrete sine transform or a two-dimensional discrete Fourier transform may be performed on the portion of the image data to calculate the two-dimensional spectral representation. The coefficients determined using any one of these transforms may also be used as feature attributes in further image recognition steps, e.g., in support vector machines. Further, such transforms may be calculated in an efficient manner. Thereby, the time overhead required for establishing whether the traffic sign has at least one graphical feature extending linearly on the traffic sign may be kept moderate.

In the method, values of a Radon transformation of the portion of the image data, evaluated at positions along a line in image space, may be estimated based on the determined coefficients, in order to establish whether the traffic sign has the at least one graphical feature extending linearly on the traffic sign. The Radon transformation of the portion of the image data is indicative of line integrals over the portion of the image data and allows the presence of linearly extending graphical features to be identified.

In the method, a function in image space is calculated by transforming the determined coefficients of the two-dimensional spectral representation which are disposed along the line in Fourier space from Fourier space to image space, in order to establish whether the traffic sign has at least one graphical feature extending linearly on the traffic sign. By performing a transformation from Fourier space back to real, i.e., image space, a number of linearly extending graphical features and/or a position of linearly extending graphical features may be more easily identified.

In the method, the function in image space may be calculated by performing a one-dimensional inverse discrete cosine transform, a one-dimensional inverse discrete sine transform or a one-dimensional inverse Fourier transform on the coefficients of the two-dimensional spectral representation that have been determined for Fourier space coordinates along the line in Fourier space. Thereby, an approximation to a Radon transformation of the portion of the image data may be generated.

In the method, a threshold comparison may be performed for the function in image space, in order to establish whether the traffic sign has at least one graphical feature extending linearly on the traffic sign. Using the threshold comparison, a robust identification of the presence of absence of linearly extending graphical features on the traffic sign may be implemented.

The method may further comprise determining the coefficients of the two-dimensional spectral representation for Fourier space coordinates disposed along at least another line in Fourier space. The establishing whether the traffic sign has the at least one graphical feature extending linearly on the traffic sign may then be performed based on the coefficients determined for Fourier space coordinates disposed along the line in Fourier space and based on the coefficients determined for Fourier space coordinates disposed along the at least another line in Fourier space. By utilizing the information on coefficients of the spectral representation determined for Fourier space coordinates disposed along different lines in Fourier space, it may be established whether the traffic sign has graphical features that extend linearly thereon along various directions. Further, signatures of linearly extending graphical features in the image data may be identified by comparing the information on coefficients of the spectral representation determined for Fourier space coordinates along different lines in Fourier space. Still further, an offset angle in the imaged traffic sign, which may lead to the at least one graphical feature having a direction relative to the horizontal axis that is different from the one theoretically expected, may be accounted for when the information on coefficients of the spectral representation determined along different lines in Fourier space is utilized.

In the method, it may be established whether the traffic sign is an end-of-restriction sign based on the coefficients of the two-dimensional spectral representation along the line in Fourier space. In many countries, end-of-restriction signs are a class of signs having, as a common feature, one or several linearly extending features. For illustration, in Germany end-of-restriction signs are circular traffic signs having five parallel lines extending at an angle of 45° relative to a horizontal axis. The method may therefore be utilized to identify whether a traffic sign belongs to the class of end-of-restriction signs.

The method may further comprise providing the portion of the image data to at least one image recognition module for further classification of the traffic sign. The at least one image recognition module to which the portion of the image data is provided may be selected from a plurality of image recognition modules based on a result of the establishing whether the traffic sign has the at least one graphical feature extending linearly on the traffic sign. Thereby, further image recognition may be aided by the establishing whether the traffic sign has the at least one graphical feature extending linearly on the traffic sign.

In the method, when the portion of the image data is provided to at least one image recognition module for further classification of the traffic sign, one coefficient or plural coefficients of the two-dimensional spectral representation may also be provided to the respective image recognition module. The coefficient or coefficients may be used as feature attributes by the respective image recognition module. The respective image recognition module may be configured to perform further image classification or image recognition based, at least in part, on the provided coefficient or coefficients that have previously been utilized to establish whether the traffic sign has one or plural features extending linearly on the traffic sign.

According to another aspect of the invention, a computer program product is provided which has stored thereon instructions which, when executed by a processor of an electronic device, direct the electronic device to perform the method according to any one aspect or embodiment. The computer program product may comprise a storage medium on which the instructions are stored. The storage medium may be selected from a group comprising a removable storage medium, such as a CD-ROM, a CD-R/W, a DVD, a persistent memory, a Flash-memory, a semiconductor memory, and a hard drive memory.

According to another aspect of the invention, a device for classifying a traffic sign is provided. The device comprises an input configured to receive image data and a processing device coupled to the input to receive the image data. The processing device is configured to identify a portion of the image data representing at least a portion of the traffic sign, to calculate a two-dimensional spectral representation of the portion of the image data, to determine coefficients of the two-dimensional spectral representation for Fourier space coordinates disposed along a line in Fourier space and to establish, based on the determined coefficients, whether the traffic sign has at least one graphical feature extending linearly on the traffic sign.

The processor is configured to calculate a function in image space by transforming the determined coefficients from Fourier space to image space, in order to establish whether the traffic sign has at least one graphical feature extending linearly on the traffic sign.

As has been explained with regard to the methods according to various aspects and embodiments above, a device having this configuration is adapted to establish whether the traffic sign has at least one graphical feature extending linearly on the traffic sign. The establishing may be based on a spectral representation of a portion of the image data. The spectral representation may be efficiently calculated. Further, information included in the spectral representation may be utilized in further image recognition, for example, as feature attributes in support vector machines.

The device may further comprise a camera coupled to the input to provide the image data thereto. Thereby, traffic signs in an environment of a vehicle may be classified. The device may be configured to perform the method of any one aspect or embodiment described herein. In particular, the processing device may be configured to perform the various transforming and calculating steps described with reference to the methods according to various aspects or embodiments.

According to another aspect of the invention, a driver assistance system for a vehicle is provided, which comprises the device for recognizing a traffic sign according to any one aspect or embodiment. Thereby, the classification of traffic signs by a driver assistance system installed in a vehicle may be aided.

The methods and devices according to the various aspects and embodiments of the invention may be utilized in all fields of application in which it is desirable or required to classify or recognize a traffic sign. It is anticipated that driver assistance systems installed in vehicles, or methods and systems for automatic feature extraction that may be utilized to generate digital maps are possible fields of application. However, the invention is not limited to these specific applications that are mentioned for illustration rather than limitation.

Brief Description of the Drawings

Embodiments of the invention will be described in more detail with reference to the accompanying drawing.

Fig. 1 is a block diagram representation of a vehicle system equipped with a device for classifying a traffic sign according to an embodiment.

Figs. 2A and 2B are schematic representations of image data representing a traffic sign and of a portion of such image data.

Fig. 3 is a schematic representation of coefficients of a two-dimensional spectral representation that are utilized in a method and device according to an embodiment.

Fig. 4 is a schematic representation of coefficients of a two-dimensional spectral representation that are utilized in a method and device according to another embodiment.

Fig. 5 is a schematic representation of a function in coordinate space that is calculated based on the coefficients of the two-dimensional spectral representation in a method and device according to an embodiment.

Fig. 6 is a flow diagram representation of a method according to an embodiment.

Fig. 7A illustrates exemplary image data of a traffic sign, and Figs. 7B and 7C illustrate exemplary functions calculated using a method and device according to an embodiment.

Fig. 8A illustrates exemplary image data of another traffic sign, and Fig. 8B illustrate exemplary functions calculated using a method and device according to an embodiment.

Fig. 9 illustrates coefficients of a two-dimensional spectral representation of image data representing a traffic sign that are utilized in a method and device according to an embodiment.

Fig. 10 is a graph for illustrating methods according to further embodiments.

Fig. 11 is a flow diagram representation of a method according to another embodiment.

Detailed Description of Preferred Embodiments

Exemplary embodiments of the invention will be described with reference to the drawings in the following. It is to be understood that the present invention is not limited to the specific embodiments. For illustration, while some embodiments will be described in the context of driver assistance systems provided onboard of vehicles, methods and devices according to embodiments may also be implemented in other fields of application, such as the analysis of previously recorded image sequences for generating digital maps. Further, unless explicitly stated otherwise, the features of the various embodiments may be combined with each other.

Methods of and devices for classifying traffic signs are provided. The methods and devices are configured to establish whether the traffic sign has at least one graphical feature that extends linearly on the traffic sign. For illustration rather than limitation, examples for such traffic signs are end-of-restriction signs in various countries, such as Germany. According to embodiments, a portion of image data may be subject to a transform from image space, i.e., the space having image pixels as coordinates, to Fourier space, i.e., the space having spatial frequencies of a set of periodically varying orthonormal basis functions as coordinates.

In the methods and devices according to various embodiments, image data or a portion of image data is subject to various operations, such as performing transforms from image space to Fourier space. Each pixel of image data has associated with it at least one value. The image data may be interpreted to be a two-dimensional data field or signal which may be subject to the operations explained in more detail below. For illustration, the values associated with the pixels of the image data for which the various operations may be performed may be greyscale values of a greyscale image. If the image data has colour information, for each pixel the colour tuple of a colour model, such as RGB, CMYK or similar, may be converted to greyscale before the various operations are performed thereon. Alternatively, the various operations may also be performed on one of the values of a colour tuple of a colour model.

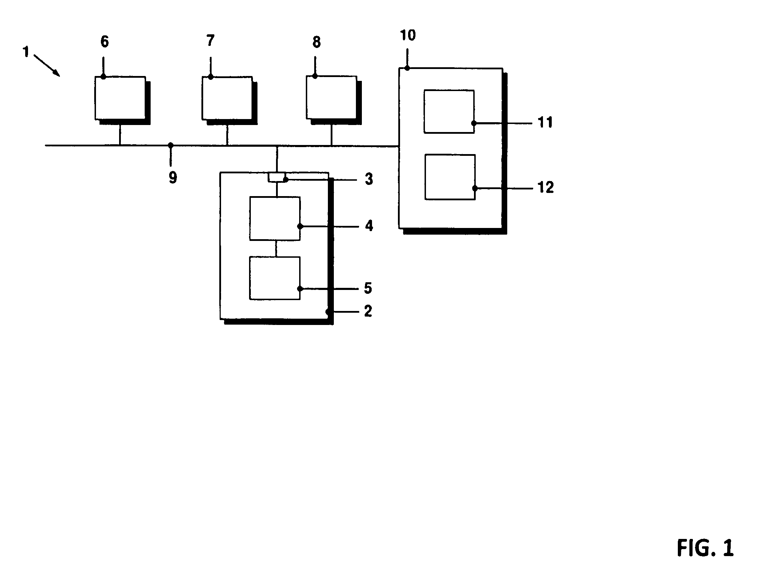

Fig. 1 shows a schematic representation of a driver assistance device which is coupled to a vehicle board network 10. The driver assistance device 1 includes an image recognition device 2, which is configured to classify traffic signs according to any one of the methods described herein. The driver assistance device 1 further includes a two-dimensional (2D) camera 6, a three-dimensional (3D) camera 7 and a user interface 8. The image recognition device 2, the 2D camera 6 and the 3D camera 7 are coupled to each other and to the vehicle board network 10 via a bus 9. The vehicle board network 10 can include various controllers or vehicle systems 11, 12 that are adapted to affect the behaviour of the vehicle. Examples for controllers or vehicle systems 11, 12 include antilock brake systems (ABS), traction control systems (PCS), and electronic stability programs (ESP).

The 2D camera 6 is adapted to capture images of an environment of a vehicle in which the driver assistance device 1 is installed. The 2D camera may include a charge coupled device (CCD) sensor or another sensor adapted to receive electromagnetic radiation and to provide image data representing an image of the environment of the vehicle to the image recognition device 2. The image captured by the 2D camera includes, for a plurality of image pixels, at least a greyscale value or a colour-tuple that is convertable to a greyscale or brightness information.

The 3D camera 7 is adapted to capture a 3D image of the environment of the vehicle. A 3D image is a depth map of the field of view (FOV) of the 3D camera 7. The depth map includes distance information for a plurality of directions in the FOV of the 3D camera, mapped onto the pixels of the 3D image. The 3D camera 7 has a FOV overlapping with a FOV of the 2D camera 6. The 3D camera 7 may include a time of flight (TOF) sensor, e.g., a Photonic Mixer Device (PDM) sensor. While the driver assistance system 1 is shown to have a 3D camera 7, which may be utilized in identifying a portion of the image data provided by the 2D camera that corresponds to a traffic sign, the 3D camera may be omitted in other embodiments.

The image recognition device 2 has an interface 3 coupled to the bus 9 to receive the image data from the 2D camera 6 and, if provided, the 3D image data from the 3D camera 7. The image recognition device 2 further has a processing device 4 which may include one or plural processors adapted to process the image data. The image recognition device 2 further has a storage medium 5 in which instruction code may be stored which, when executed by the processing device 4, causes the processing device 4 to process image data provided by the 2D camera 6 to establish whether the traffic sign has at least one graphical feature, such as a line or stripe or plural lines or stripes, that extends linearly on the traffic sign. The storage medium 5 may be, for example, a CD-ROM, a CD-R/W, a DVD, a persistent memory, a Flash-memory, a semiconductor memory, or a hard drive memory.

The image recognition device 2 is configured such that the processing device 4, in operation, receives image data representing a 2D image and processes the image data to identify a portion of the image data that represents at least a portion of a traffic sign and to establish whether the traffic sign includes one or plural graphical features that extend linearly on the traffic sign. The processing device 4 may be configured to perform a transform on the portion of the image data, in order to calculate a two-dimensional spectral representation of the portion of the image data. The transform may be, for example, a discrete cosine transform, a discrete sine transform or a discrete Fourier transform. The processing device 4 may be configured to calculate the transform using a fast algorithm, such as a discrete Fourier transform algorithm. The processing device 4 may be configured to evaluate coefficients of the spectral representation, i.e., the portion of the image data transformed into the spectral domain, along one or plural lines in Fourier space.

The processing device 4 may be configured such that, in order to identify a portion of image data that represents at least a portion of a traffic, a shape-recognition may be performed. In one implementation, a circular Hough transformation may be performed to identify traffic signs having a circular shape in the image data. In another implementation, the 3D image data provided by the 3D camera 7 may be utilized to identify traffic signs. 3D image data include a depth map and thereby provide a segmentation of the environment of the vehicle. The 3D image data provided by the 3D camera 7 may be evaluated to identify, in the image data provided by the 2D camera 6, essentially planar objects having a size and/or shape that corresponds to a traffic sign.

The processing device 4 may be configured such that, in order to calculate a two-dimensional spectral representation of the portion of the image data, a discrete cosine transform

$$U(k_1, k_2) = \sum_{n_1=0}^{N_1-1} \sum_{n_2=0}^{N_2-1} u(n_1, n_2) \cdot \cos\left[\frac{\pi}{N_1} \cdot \left(n_1 + \frac{1}{2}\right) \cdot k_1\right] \cdot \cos\left[\frac{\pi}{N_2} \cdot \left(n_2 + \frac{1}{2}\right) \cdot k_1\right]$$

$$(1)$$

is calculated. Here, $u(n_1, n_2)$ represents a value, e.g., a greyscale value, associated with a pixel having coordinates ($n_1$, $n_2$) in image space, $N_1$ represents a total number of pixels in the portion of the image data in a first spatial direction, $N_2$ represents a total number of pixels in the portion of the image data in a second spatial direction orthogonal to the first spatial direction, $k_1$ and $k_2$ represent spatial variation frequencies of the cosine base functions of the spectral representation in Eq. (1), with $o \leq k_1 < N_1-1$ and $o \leq k_2 \leq N_2-1$, and $U(k_1, k_2)$ is the coefficient of the spectral representation in cosine functions associated with the spatial frequencies $k_1$ and $k_2$ along the $x_1$ and $x_2$-axis, respectively. Other variants of discrete cosine transforms are known, which may be also be employed. Alternatively or additionally, the processing device 4 may be configured such that, in order to calculate a two-dimensional spectral representation of the portion of the image data, a discrete Fourier transform

EP 2 363 827 B1

$$U(k_1,k_2)=\sum_{n_1=0}^{N_1-1}\sum_{n_2=0}^{N_2-1} u(n_1,n_2)\cdot\exp\left[-\frac{2\pi}{N_1}\cdot i\cdot n_1\cdot k_1\right]\cdot\exp\left[-\frac{2\pi}{N_2}\cdot i\cdot n_2\cdot k_2\right]$$

$$(2)$$

is calculated, where $U(k_1,k_2)$ is the coefficient of the spectral representation in exponentials with imaginary arguments associated with the spatial frequencies $k_1$ and $k_2$ along the $x_1$ and $x_2$-axis, respectively. All other variables in Eq. (2) are defined as explained with reference to Eq. (1).

The processing device 4 may be configured such that, in order to establish whether the traffic sign has one or plural graphical features that extend linearly on the traffic sign, the coefficients of the spectral representation $U(k_1, k_2)$ are analyzed for values of $(k_1, k_2)$ located along a line in Fourier space. In one implementation the processing device 4 may be configured to analyze the coefficients $U(k_1, k_2)$ for $0\leq k_1\leq N_1-1$ and $k_2=\lfloor p\cdot k_1+q\rfloor=\mathrm{floor}(p\cdot k_1+q),$ where p and q are rational values characterizing the line in Fourier space along which $U(k_1, k_2)$ is evaluated. Here, floor($\cdot$) denotes the floor function. In another implementation the processing device 4 may be configured to analyze the coefficients $U(k_1, k_2)$ for $0\leq k_1\leq N_1-1$ and $k_2=\lceil p\cdot k_1+q\rceil=\mathrm{ceiling}(p\cdot k_1+q),$ where p and q are rational values characterizing the line in Fourier space along which $U(k_1, k_2)$ is evaluated. Here, ceiling($\cdot$) denotes the ceiling function. It will be appreciated that, for a finite number of image space coordinates, the value of $k_2$ defined as indicated above may need to be transformed to the domain ranging from 0 to $N_2-1$ by subtraction of multiples of $N_2$, in order to satisfy $0\leq k_2\leq N_2-1$. As such techniques are well known in the art of image recognition, detailed explanations may be omitted.

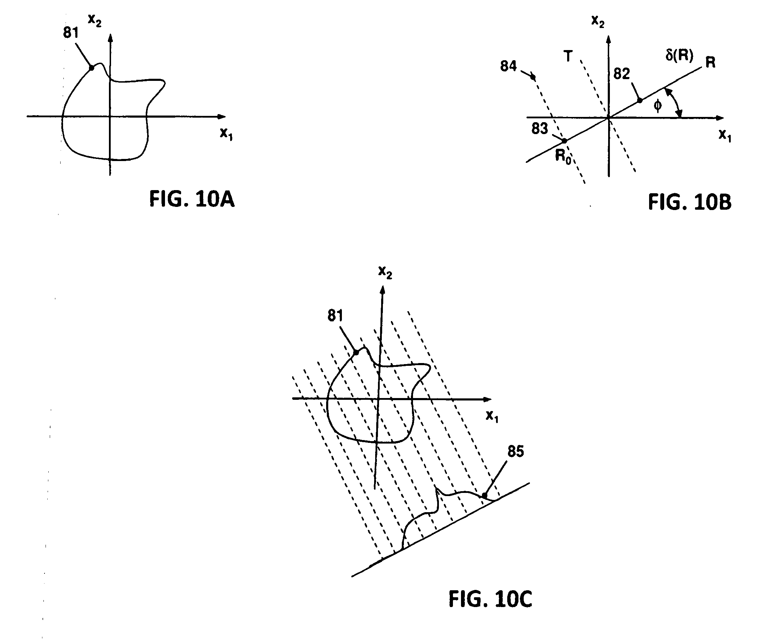

The line in Fourier space from which the coefficients of the spectral representation $U(k_1, k_2)$ are taken for further analysis, i.e., the parameters p and q, may be selected based on the known orientation of graphical features that extend linearly on traffic signs when the traffic signs are correctly oriented relative to the street. For illustration, if it is desired to classify traffic signs by establishing whether or not a traffic sign has one or plural lines extending at a slope of p' throughout the traffic sign in an image space coordinate system, the parameters p and q may be selected to be p=-1/p' and q=0 or q=$N_2$-1. I.e., the line in Fourier space may be selected to pass through the point in Fourier space associated with a slowly varying function in real space and to be oriented such that it is essentially orthogonal to the direction along which the graphical features extend on the traffic sign in image space. For such a choice of the line in Fourier space, by transforming the values $U(k_1, k_2)$ with (k1, k2) positioned along the line in Fourier space back from Fourier space to image space using, e.g., a one-dimensional inverse discrete cosine transform (IDCT) or a one-dimensional inverse discrete Fourier transform, the resulting function in image space provides an estimate for a Radon transformation of the portion of the image data, as will be explained in more detail with reference to Fig. 10.

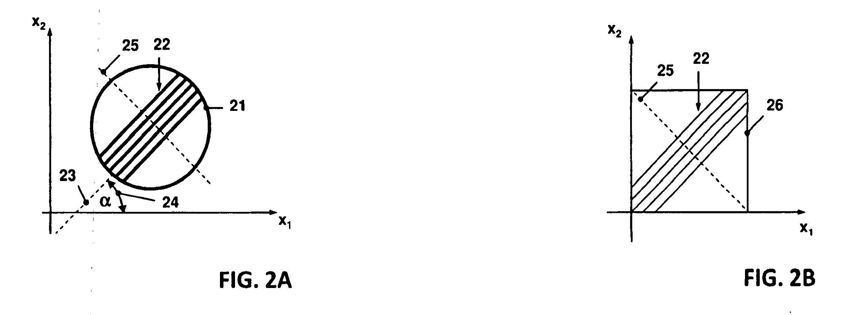

For further illustration, if it is desired to classify traffic signs by establishing whether or not a traffic sign has plural lines extending at an angle of 45° relative to a first image space coordinate axis, as is the case for an end of restriction sign in Germany illustrated in Fig. 2A, the coefficients of the spectral representation $U(k_1, k_2=N_2-1-k_1)$ associated with values of $(k_1, k_2)$ located along a line oriented at 135° relative to the first Fourier space coordinate axis may be analyzed. The processing device 4 may be configured to transform $U(k_1, k_2=N_2-1-k_1)$ from Fourier space to image space, using, e.g., a one-dimensional inverse discrete cosine transform (IDCT) or a one-dimensional inverse discrete Fourier transform. The resulting function in image space will exhibit pronounced dips or peaks indicative of the one or plural lines extending on the traffic sign at an angle of 45°, if present.

The processing device 4 may also be configured such that the coefficients of the spectral representation $U(k_1, k_2)$ for values of $(k_1, k_2)$ located on two or more different lines may be analyzed to determine whether the traffic sign has one or plural graphical features, such as lines or stripes, that extend linearly on the traffic sign. Thereby, traffic signs may be classified according to various classes of traffic signs having graphical features extending linearly in different directions thereon.

The image recognition device 5 of the driver assistance system 1 may be configured such that, depending on whether or not a traffic sign has plural lines extending thereon in a given direction, the processing device 4 analyzes the image data further. For illustration, if it has been established that a traffic sign is an end-of-restriction sign, the image data may be provided to a classifier, e.g., a support vector machine, a neural network or an Adaboost algorithm, to identify which type of end-of-restriction sign the traffic sign is. In one implementation, the processing device 4 may be configured to determine whether an end-of-restriction sign indicates the end of a specific speed limit or the end of all restrictions. The further analysis performed by the processing device 4 may still be based on the spectral representation of the portion of the image data that has been determined to establish whether the traffic sign has one or plural graphical features extending linearly thereon.

The image recognition device 5 of the driver assistance system 1 may be configured such that, depending on the result of an image recognition process a signal is output to the user interface 8. For illustration, if the user interface 8 includes a display on which a current speed limit is shown, the image recognition device 5 may provide information to a display controller indicating that an end-of-restriction sign has been detected. Responsive to this information, the display controller may update the speed limit information output via the user interface 8.

Referring to Figs. 2-5, operation of the processing device 4 of the image recognition 2 will be explained in more detail with reference to an exemplary traffic sign.

Fig. 2A illustrate image data representing a traffic sign 21. For illustration rather than limitation, an end-of-all-restrictions traffic sign as used in Germany is illustrated in Fig. 2A. The traffic sign 21 has plural stripes 22 extending in a direction 23 on the traffic sign. When the traffic sign has its conventional orientation relative to the street, the direction 23 encloses an angle $\alpha$ of 45°, indicated at 24, with the positive horizontal axis in image space. The angle $\alpha$ is the angle enclosed by the first image space coordinate axis and the direction along which the graphical features on the traffic sign extend linearly, taken in quadrants I and IV (upper half plane) of the image space coordinate system. Fig. 2B shows a portion of the image data 26 corresponding to an interior of the traffic sign. The traffic sign and a portion in its interior may be identified in the image data using, e.g., a circular Hough transformation or image segmentation based on 3D image data provided by the 3D camera 7. If the image data includes colour information, the image data may, but does not need to, be converted to a greyscale representation. The plural lines indicated in Fig. 2B may for example be represented as a function

$$u(x_1, x_2) = 1 - \left( \delta_{x_1 - x_2} + \delta_{x_1 - x_2 + a} + \delta_{x_1 - x_2 - a} + \delta_{x_1 - x_2 + 2 \cdot a} + \delta_{x_1 - x_2 - 2 \cdot a} \right)$$

$$(3)$$

with the discrete Dirac $\delta$-function having a value of 1 when its index is zero and a value of o otherwise, where "a" denotes a spacing between neighbouring lines in the $x_2$-direction. The portion 26 of the image data may be selected to have a rectangular shape with $N_1$ pixels in the $x_1$ direction and $N_2$ pixels in the $x_2$ direction. The portion 26 of the image data may be selected to have square shape with $N_1 = N_2$.

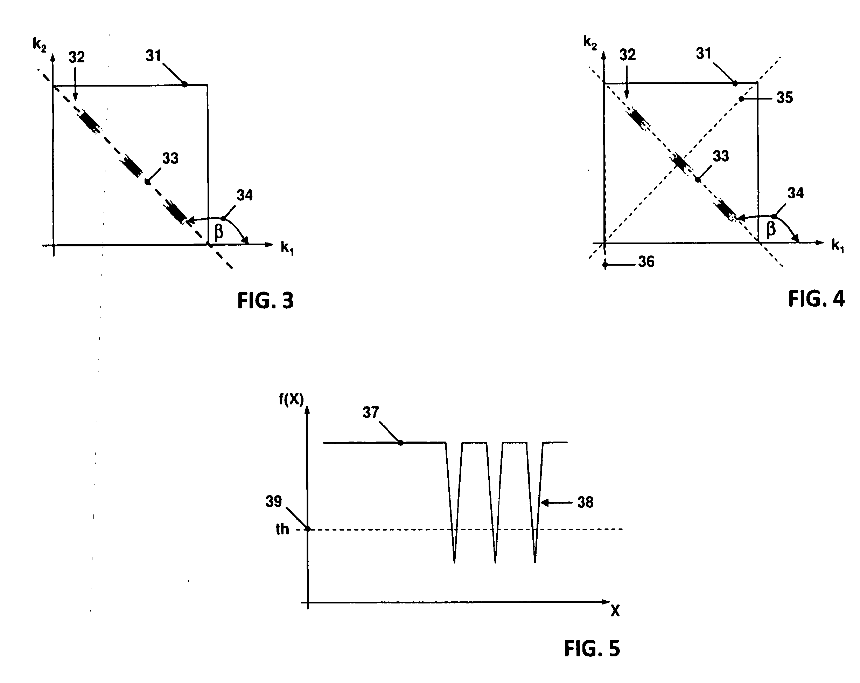

Fig. 3 illustrates, in a greyscale representation shown in Fourier space 31, the modulus of the coefficients U $(k_1, k_2)$ of a spectral representation of the portion 26 of the image data of Fig. 2B. In Fig. 3, the modulus $|U(k_1, k_2)|$ of coefficients determined by a discrete Fourier transform are illustrated. In the greyscale representation of Fig. 3, large values are indicated by dark colours, while values of zero are indicated in white. As illustrated in the representation of the coefficients in Fourier space 31, a significant spectral weight is found only in a region 32 of Fourier space that extends linearly in a direction essentially perpendicular to the direction of the plurality of stripes 22 in the image data. The coefficients U($k_1, k_2$) may therefore be further analyzed for values of ($k_1, k_2$) disposed along a line 33 in Fourier space, e.g. for $k_2 = N_2 - 1 - k_1$.

The line 33 in Fourier space is selected such that it is essentially perpendicularly to the direction 23 along which the stripes 22 extend on the traffic sign in image space. As illustrated in Fig. 3, the line 33 encloses an angle $\beta$, which is indicated at 34 with the positive $k_1$-axis in Fourier space. The angle $\beta$ is measured between the positive $k_1$ axis in Fourier space and the line 33 in quadrants I and IV of the Fourier space coordinate system. The line 33 in Fourier space has a direction such that $85° \leq |\beta - \alpha| \leq 95°$, in particular such that $88° \leq |\beta - \alpha| \leq 92°$, in particular such that $89° \leq |\beta - \alpha| \leq 91°$, in particular such that $|\beta - \alpha| \approx 90°$.

While Fig. 3 indicates one line 33 in Fourier space from which the coefficients of the spectral representation are taken for further analysis, it may be desirable to identify whether there is at least one graphical feature on the traffic sign that extends linearly thereon in a first direction, and whether there is at least one graphical feature on the traffic sign which extends linearly thereon in a second direction different from a first direction. Further, while the direction of graphical features on the traffic sign relative to, e.g., a road surface may theoretically be known for the case in which the traffic sign is perfectly oriented, a varying distance of the camera 6 from the road side, optical imperfections in image acquisition, or incorrect positioning of the traffic sign itself may have the effect that the image of the traffic sign in the image data is angularly shifted. It may be desirable to establish whether the traffic sign has one or more linearly extending graphical features even in such scenarios. In embodiments, the coefficients of the spectral representation may be further analyzed for values of the spatial frequencies ($k_1, k_2$) disposed not only along one, but along plural lines in Fourier space.

Fig. 4 is a graphical representation of the Fourier space 31 which schematically illustrates the modulus of coefficients of a discrete Fourier transform of the portion 26 of the image data of Fig. 2B. Schematically illustrated are additional lines 35 and 36 in Fourier space from which the coefficients of the spectral representation may be taken for further analysis. For illustration, the line 35 in Fourier space is given by ($k_1, k_2 = k_1$) with $o \leq k_1 \leq N_1 - 1$, and the line 36 in Fourier space is given by (o, $k_2$) with $o \leq k_2 \leq N_2-1$. For illustration, as there is only a small spectral weight along most of the line 35 in Fourier space, the processing device 4 may establish that the portion of the image data does not have graphical features extending linearly at an angle of 135°, i.e., perpendicular to the direction of the line 35 in Fourier space, in the portion 26 of the image data. Similarly, as there is only a small spectral weight along most of the line 36 in Fourier space, the processing device 4 may establish that the portion of the image data does not have graphical features extending linearly in a horizontal direction, i.e., perpendicular to the direction of the line 36 in Fourier space, in the portion 26 of the image data.

Alternatively or additionally, the coefficients of the spectral representation that are evaluated to establish whether there are linearly extending features on the traffic sign may be taken from lines that are angularly offset by a small angle, e.g., of less than or equal to 5°, from the line(s) 33 in Fourier space that extend perpendicularly to the expected direction of the graphical feature in image space. Analyzing the coefficients of the spectral representation evaluated at spatial frequencies disposed along such lines may aid the classification in cases in which the traffic sign is angularly offset relative to its theoretically expected orientation.

Fig. 5 is a graphical representation of a function 37 in image space. The function f(X) is obtained by transforming the coefficients of the spectral representation, determined for values of the spatial frequencies ($k_1$, $k_2$) along a line in Fourier space, back to image space. The function 37 in image space may be calculated by the processing device 4 by performing, e.g., a one-dimensional inverse discrete Fourier transform, a one-dimensional inverse discrete cosine transform or a one-dimensional inverse discrete sine transform. The function 37 in image space exhibits pronounced dips 38. The dips 38 in the function 37 indicate that the line-integral along the direction 23 of the graphical features in the image data, calculated for various positions along a line 25 that extends perpendicular to the direction of the graphical features in the portion 26 of the image data exhibits a pronounced feature when the integral is performed along one of the graphical features 22, i.e., along one of the parallel five stripes. Depending on the specific implementation of the transform from Fourier space back to image space that is used to calculate the function f(X) in image space, the number and position of peaks or dips in f(X) does not necessarily have to be in one-to-one correspondence with the number and position of linearly extending graphical features in the original image data. However, pronounced features, such as peaks or dips, may be identified in f(X) that allow the processing device 4 to establish that one or plural linearly extending graphical features are present in the portion of the image data, i.e., on the traffic sign, that extend along a direction in image space which is correlated with the direction in Fourier space from which the coefficients of the spectral representation have been taken to calculate f(X).

The processing device 4 may be configured to perform a threshold comparison for f(X) to establish whether the traffic sign falls into the class of traffic signs having graphical features extending linearly thereon in a given direction. For illustration, a comparison with a threshold 38 may be performed. If f(X) is less than the threshold 38 for at least some values of X, i.e., for at least some image space coordinates, the processing device 4 may establish that the traffic sign falls into the class of traffic signs having graphical features extending linearly thereon in a given direction.

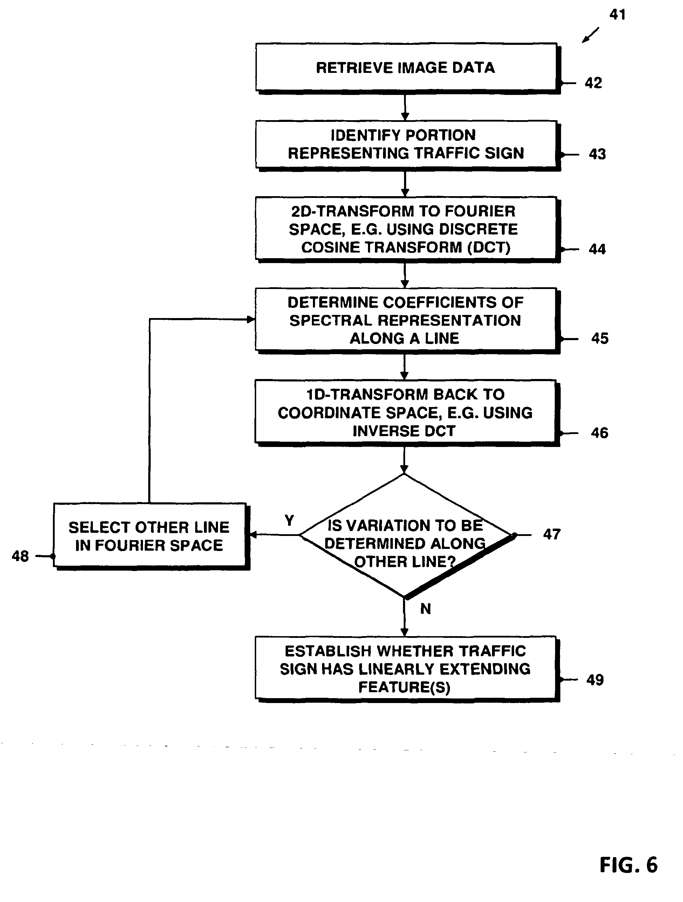

Fig. 6 is a flow diagram representation of a method according to an embodiment. The method, which is generally indicated at 41, may be performed by the image recognition device 2 of the driver assistance device of Fig. 1. In the method, a classification of a traffic sign is performed. Classifying the traffic sign includes establishing whether the traffic sign has at least one graphical feature extending linearly thereon.

At 42, image data are retrieved. The image data may be retrieved from a 2D camera, such as the 2D camera 6 of the driver assistance device 1. Alternatively or additionally, the image data may be retrieved from a storage medium, for example when automatically evaluating previously recorded images.

At 43, a portion of the image data that represents a traffic sign is identified. The portion representing a traffic sign may be identified using a suitable image segmentation method. For illustration, if it is desired to classify traffic signs by establishing whether a circular traffic sign has at least one graphical feature extending linearly thereon, the identifying at 43 may involve calculating a circular Hough transformation. Alternatively or additionally, identifying the portion of the image data may be based on 3D image data provided by a 3D camera, e.g., the 3D camera 7 of the driver assistance device 1.

At 44, coefficients of a two-dimensional spectral representation of the portion of the image data are calculated. Calculating the two-dimensional spectral representation may involve calculating a two-dimensional discrete Fourier transform, a two-dimensional discrete cosine transform or a two-dimensional discrete sine transform.

At 45, coefficients of the spectral representation are determined for Fourier space coordinates located along a line in Fourier space. As the coefficients have previously been calculated at 44, the determining at 45 may be implemented by identifying coefficients of the spectral representation that are associated with given coordinates in Fourier space, located along a line in Fourier space. The coefficients of the spectral representation may be determined for coordinates in Fourier space that are disposed along a line having a pre-determined direction in Fourier space. The pre-determined direction in Fourier space may be a direction that is determined based on the direction that the at least one graphical feature, if present, has on the traffic sign. Alternatively or additionally, the pre-determined direction in Fourier space may be one of plural pre-determined directions that are different from each other. The plural pre-determined directions may be such that, based on the coefficients of the spectral representation for Fourier space coordinates along the plural pre-determined directions, it may be established whether the traffic sign belongs to a class of traffic signs having at least one graphical feature extending linearly thereon in one of plural different directions.

At 46, a function in image space is calculated based on the coefficients of the spectral representation associated with Fourier space coordinates that are disposed along a line in Fourier space. To calculate the spectral representation, a one-dimensional transform of the coefficients may be calculated. For illustration, the coefficients may be subject to a transform that is a one-dimensional inverse discrete Fourier transform, a one-dimensional inverse discrete cosine transform or a one-dimensional inverse discrete sine transform. The transform employed at 46 to calculate the function in image space may be the inverse, although in one dimension, of the transform employed at 44 to calculate the two-dimensional spectral representation.

At 47, it is determined whether the coefficients are to be determined for at least one other line in Fourier space. If this is the case, the other line is selected at 48 and the method returns to 45.

At 49, it is established whether the traffic sign has at least one graphical feature extending linearly thereon. The establishing at 49 may be performed based on the function(s) in image space determined at 46. The establishing at 49 may involve determining whether the function(s) in image space have one or plural pronounced changes in functional value. A threshold comparison may respectively be performed to establish, for each one of the functions determined at 46, whether the function has at least some functional values smaller or greater than a pre-determined threshold. The position at which a pronounced change in functional value occurs may be compared to the expected position of lines in known traffic signs.

Additional steps may be included in the method. For illustration, a filtering may be performed in the Fourier domain before the one-dimensional transform back to image space is calculated. The filtering may be performed to compensate blurring. The filtering may be performed on the two-dimensional spectral transform calculated at 44 or on the coefficients along the line in Fourier space determined at 45. At |f|-ramp filter may be used.

For further illustration, a normalization may be applied to the function in image space calculated at 49 before a threshold comparison is performed. The function calculated at 49 may be normalized so that the normalized function has a maximum value of 1 prior to performing the threshold comparison.

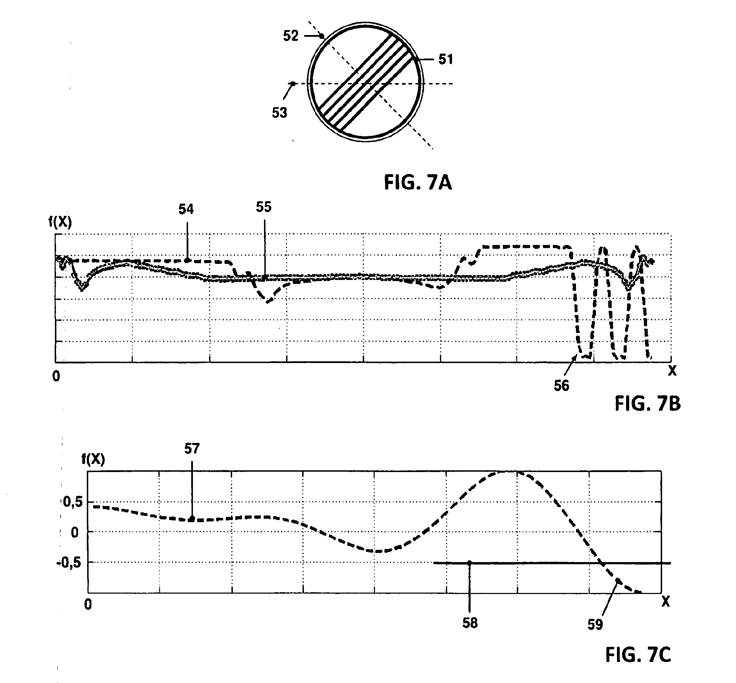

Referring to Figs. 7-9, the methods and devices according to embodiments will be explained further in the context of exemplary traffic signs.

Fig. 7A illustrates an end-of-all-restrictions sign 51, as it is used in Germany. Fig. 7B shows functions 54, 55 in image space that have been determined by applying the method of Fig. 6 to image data representing the traffic sign 51. The function 54 is determined by performing a two-dimensional discrete cosine transform on a portion of the image data, determining the coefficients $U(k_1, k_2)$ for Fourier space coordinates disposed along a line that is directed at 135° relative to the $k_1$-axis and performing a one-dimensional inverse discrete cosine transform on the thus determined coefficients back to image space. The function 55 is determined by determining the coefficients $U(k_1, k_2)$ for Fourier space coordinates disposed along a line that is directed at o° relative to the $k_1$-axis, i.e., that is parallel to the $k_1$-axis, and performing a one-dimensional inverse discrete cosine transform on the thus determined coefficients back to image space. The function 54 exhibits pronounced dips 56. The function 55 does not exhibit a similar behaviour. By comparing the functions 54 and 55, it may be established that the traffic sign has lines extending perpendicularly to the line indicated at 52 in Fig. 7A, but does not have lines that extend linearly on the traffic sign in a direction perpendicular to the line indicated at 53 in Fig. 7A.

As can be seen in Fig. 7B, depending on the specific implementation of the transform that is performed on the portion of the image data to calculate the coefficients of the spectral representation, and depending on the inverse one-dimensional transform, the number and position of pronounced peaks or dips in the function 54 in image space need not always be identical to the number and positions of the linearly extending graphical features in the image data. In particular, when cosine or sine transforms are employed, some information may be lost as compared to the original data, which may have the effect that not each line present in the image data may be identified as separated peak or dip in the function f(X). However, the presence or absence of such graphical features having a given direction may be established based on the function 54 in image space.

Fig. 7C shows a function 57 in image space that has been determined by applying the method of Fig. 6 to image data representing the traffic sign 51 when filtering and normalization are employed. More specifically, to address blurring effects, the illustrated function 57 has been calculated by applying an |f|-ramp filter to the coefficients $U(k_1, k_2)$ for Fourier space coordinates disposed along a line that is directed at 135° relative to the $k_1$-axis, by transforming the filtered coefficients to image space and by normalizing the result such that the maximum value of the function f(X) in image space is one. While the filtering suppresses pronounced variations in f(X), the five stripes extending perpendicularly to the line 52 indicated in Fig. 7A causes f(X) to have small values in at least one region, as indicated at 59. The values of the function f(X) in image space may be compared to a threshold 58 to establish whether the traffic sign 51 has linearly extending features directed perpendicularly to the line 52 indicated in Fig. 7A.

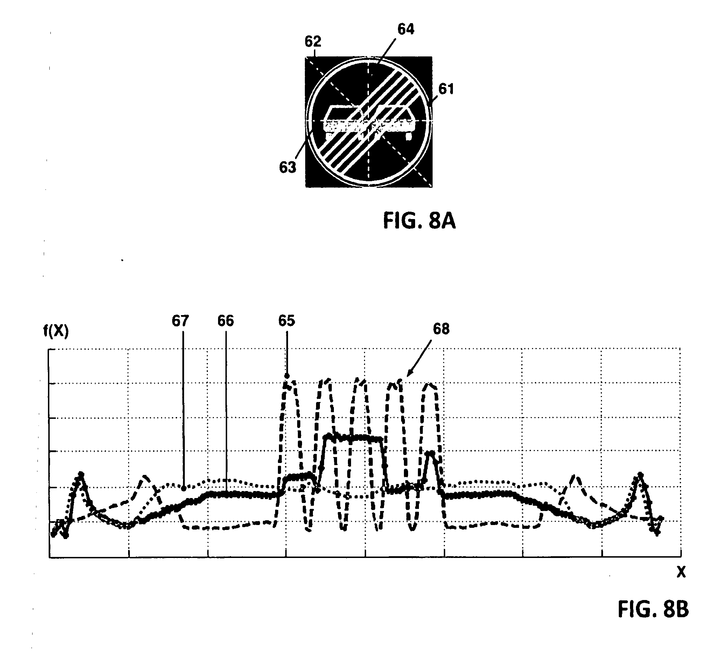

Fig. 8A illustrates an end-of-no-passing sign 61, as it is used in Germany. An inversion of greyscales has been performed on the image data, with white colour being associated with high greyscale values. Fig. 8B shows functions 65-67 in image space that have been determined by applying the method of Fig. 6 to image data representing the traffic sign 61. The function 65 is determined by performing a two-dimensional discrete Fourier transform on the portion of the image data, determining the coefficients $U(k_1, k_2)$ for Fourier space coordinates disposed along a line that is directed at 135° relative to the $k_1$-axis and performing a one-dimensional inverse discrete Fourier transform on the thus determined coefficients back to image space. The function 66 is determined by determining the coefficients $U(k_1, k_2)$ for Fourier space coordinates disposed along a line that is directed at 90° relative to the $k_1$-axis, i.e., that is parallel to the $k_2$-axis, and performing a one-dimensional inverse discrete Fourier transform on the thus determined coefficients back to image space. The function 67 is determined by determining the coefficients $U(k_1, k_2)$ for Fourier space coordinates disposed along a line that is directed at o° relative to the $k_1$-axis, i.e., that is parallel to the $k_1$-axis, and performing a one-dimensional inverse discrete Fourier transform on the thus determined coefficients back to image space. The function 65 exhibits pronounced peaks 68 having a number and position corresponding to the number and position of lines in the portion 61 of the image data. The functions 66 and 67 also show some variation, due to the presence of the grey car symbols in the traffic sign, but do not exhibit the same pronounced peaks as the function 65. By comparing the function 65 to the functions 66 and 67, it may be established that the traffic sign has lines extending perpendicularly to the line indicated at 62 in Fig. 8A, but that there are no lines of comparable brightness and length that extend linearly on the traffic sign in a direction perpendicular to the lines indicated at 63 and 64 in Fig. 8A.

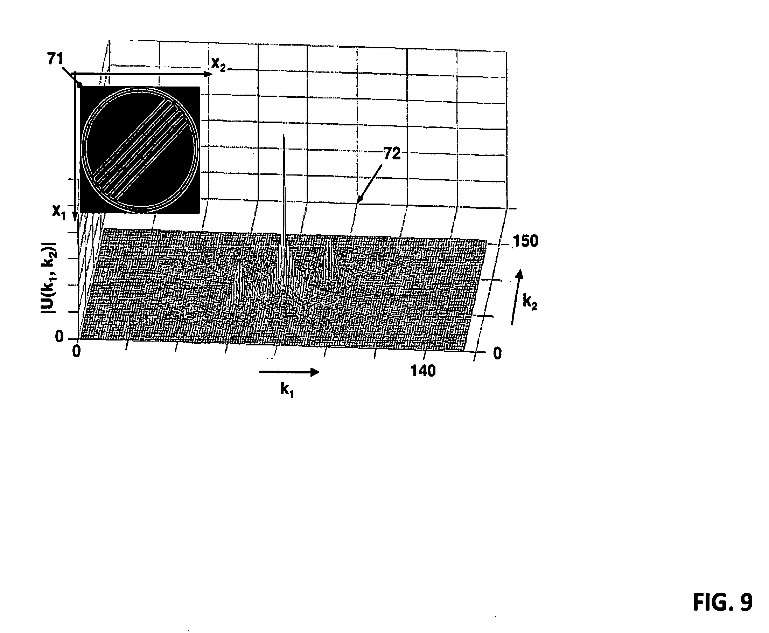

Fig. 9 illustrates the modulus of coefficients $|U(k_1, k_2)|$ obtained by performing a discrete two-dimensional Fourier transform on a colour-inverted end-of-all-restrictions sign 71 as it is used in Germany. The image space coordinate system has been chosen such that the origin of the image space coordinate system is in the top left corner of the end-of-restriction sign 71, so that the five stripes extend at an angle of 135° relative to the positive $x_1$-axis. As can be seen in Fig. 9, a significant spectral weight of the Fourier spectral representation is concentrated along the line $k_1=k_2$ in Fourier space, where $|U(k_1, k_2)|$ has high values. By analyzing the coefficients of the spectral representation along the line $k_1=k_2$ in Fourier space, it may thus be determined whether the traffic sign has one or plural graphical features extending at an angle of 135° relative to the positive $x_1$-axis.

While the operation of methods and devices has been explained in the context of exemplarily traffic signs with reference to Figs. 2-5 and 7-9, the methods and devices may generally be utilized to establish whether a traffic sign has one or plural graphical features that extend linearly thereon. The methods and devices may be configured to analyze coefficients of a spectral representation for Fourier space coordinates along a line in Fourier space, as will be explained in more detail with reference to Fig. 10.

Fig. 10A shows a schematic illustration 81 of a two-dimensional function $u(x_1, x_2)$ representing graphical features on a traffic sign. By performing a two-dimensional Fourier transform, a spectral representation of $u(x_1, x_2)$ is provided by its Fourier transform $U(k_1, k_2)$. The Fourier transform $U(k_1, k_2)$ may be evaluated along a line in Fourier space. Assuming that the Fourier transform $U(k_1, k_2)$ is evaluated along a line in Fourier space having an angle of $\phi$ relative to the $k_1$-axis and passing through $(k_1, k_2)=(o,o)$, the Fourier space coordinates of the line may be parameterized as $(k_1, k_2)=k.(\cos \phi, \sin \phi)$. For a given value of $\phi$, this function may also be referred to as $Up(k, \phi)$

According to the so-called central slice theorem, which is also referred to as projection-slice theorem, the inverse Fourier transform of the thus determined function $Up(k, \phi)$ back to real space, i.e., image space, gives a function $u_p(R, \phi)$ which represents the Radon transformation of $u(x_1, x_2)$:

$$u_p(R, \phi) = \frac{1}{2 \cdot \pi} \int_{-\infty}^{\infty} U_p(k, \phi) \cdot \exp\left(i \cdot 2 \cdot \pi \cdot R \cdot k\right) \cdot dk$$
$$= \int_{-\infty}^{\infty} u_\phi(R, T) \cdot dT \tag{4}$$

where R and T define an image space coordinate system that is rotated relative to the $x_1$-$x_2$-axis-system, with $R=\cos(\phi) \cdot x_1 + \sin(\phi) \cdot x_2$ and $T= \cos(\phi) \cdot x_2 - \sin(\phi) \cdot x_1$, and where

$$u_\phi(R, T) = u(\cos(\phi) \cdot R - \sin(\phi) \cdot T, \sin(\phi) \cdot R - \cos(\phi) \cdot T). \tag{5}$$

Referring to Fig. 10B, the R-axis 82 and the T-axis are schematically indicated. As can be taken from Eq. (4) and (5), $u_p(R, \phi)$ represents the line integral onto a point on the R-axis 82 taken along a line parallel to the T-axis and passing through the point on the R-axis. I.e., $u_p(R, \phi)$ represents the projection of the function $u(x_1, x_2)$ onto the R-axis 82. For example, $u_p(R_o, \phi)$ taken at a point $R_o$ 83 on the R-axis is equal to the line integral over $u(x_1, x_2)$ along the line 84. By definition, $u_p(R, \phi)$ represents the Radon transformation of $u(x_1, x_2)$.

Fig. 10C illustrates this parallel projection along the T-direction. For reasons of clarity, the R-axis is shown offset from the origin of the image space coordinate system. The line integrals over $u(x_1, x_2)$ respectively taken over the broken lines schematically indicated in Fig. 10C provide the function $u_p(R, \phi)$ illustrated at 85, which may be determined from the two-dimensional Fourier transform of $u(x_1, x_2)$ evaluated along a line in Fourier space. The line integrals exhibit pronounced peaks or dips when they are taken along a graphical feature that extends linearly on the traffic sign and in a direction parallel to the line of projection T. Consequently, such linearly extending graphical features may be determined from the function $u_p(R,\phi)$ calculated according to Eq. (4). As has been explained above, cosine or sine transforms may be employed instead of the Fourier transform indicated in Eq. (4) to establish whether linearly extending graphical features are present on a traffic sign, as the resulting image space function still exhibits peaks or dips as they are found in the Radon transformation.

It will be appreciated that the central slice theorem mentioned in the context of Eq. (4) above may, for example, be derived from the fact that the Radon transformation may be considered to be a convolution of $u(x_1, x_2)$ and a Dirac delta function associated with the Dirac line 82 indicated in Fig. 10B. In Fourier space, the convolution of the two image space functions translates into a product of the Fourier transforms. The Fourier transform of the Dirac line, which corresponds to the line 82, is again a Dirac line, and the Radon transformation of $u(x_1, x_2)$ may therefore be determined by performing a one-dimensional transform from Fourier space to image space on $U_p(k, \phi)$.

In the methods and devices, classification of the traffic sign may continue after it has been established whether or not the traffic sign belongs to a class of traffic signs having graphical features extending linearly thereon.

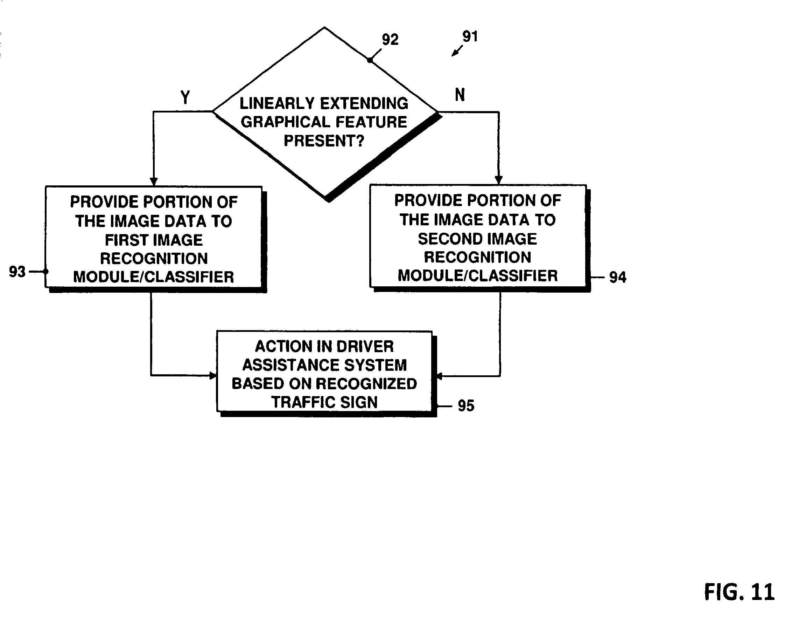

Fig. 11 is a flow diagram representation of a method according to an embodiment, which is generally indicated at 91. The method may be performed by the driver assistance device according to any one embodiment described above.

At 92, it is established whether the traffic sign has at least one graphical feature which extends linearly thereon. The establishing at 92 may be implemented such that only traffic signs having graphical features extending along one given direction, or one of plural given directions, will be identified. The establishing at 92 may be implemented using, e.g., one of the methods described with reference to Fig. 6.

If it is established at 92 that the traffic sign has at least one graphical feature which extends linearly thereon in one given direction or one of plural given directions, at 93, the portion of the image data is provided to a first image recognition module or classifier. If it is established at 92 that the traffic sign does not have at least one graphical feature which extends linearly thereon in one given direction or one of plural given directions, at 94, the portion of the image data is provided to a second image recognition module or classifier different from the first image recognition module or classifier. The first and second image recognition modules are respectively configured to perform further classification of the traffic sign. The first and second image recognition module may respectively be implemented using a support vector machine, a neural network, or an Adaboost algorithm. The first and second image recognition modules may be different from each other with regard to the feature attributes that are evaluated and/or with regard to the specific implementation of the image recognition module.

The further classification of the portion of the image data at 93 or 94, respectively, may also be based on at least one of the coefficients of the spectral representation that has previously been calculated at 92. Coefficients of a spectral representation determined by, for example, a discrete cosine transform or a discrete Fourier transform, as determined at 92, are feature attributes that may be used in the classification at 93 and 94.

At 95, an action in a driver assistance device may be initiated based on a result of the further image recognition performed at 93 or 94, respectively.

While embodiments of the invention have been described with reference to the drawings, various modifications and alterations may be implemented in other embodiments. For illustration, while methods and devices have been described which determine a spectral representation of a portion of image data by performing a Fourier transform or a discrete Fourier transform, other transforms, such as discrete cosine transforms, may be utilized in other embodiments to determine coefficients of a spectral representation. For further illustration, while the line in Fourier space from which the coefficients of the spectral representation are taken has been shown to pass through a point in Fourier space that is associated with slowly varying base function of the spectral decomposition, the line in Fourier space may also be offset from such a point, for example in order to establish whether the traffic sign has one or plural broken stripes thereon which respectively exhibit a given periodicity.

While it is expected that embodiments of the invention may be advantageously utilized in image recognition performed onboard a vehicle, the field of application are not limited thereto. Rather, embodiments of the invention may be used in any system or application in which it is desirable or required to classify traffic signs.

**Claims**

1.  A method of classifying a traffic sign (21; 51; 61; 71), said method including establishing whether said traffic sign (21; 51; 61; 71) has at least one graphical feature (22) extending linearly on said traffic sign (21; 51; 61; 71), in particular one or plural lines or stripes extending linearly on said traffic sign (21; 51; 61; 71), wherein said method comprises the following step performed by an electronic device (5):

    identifying a portion (26) of image data representing at least a portion of said traffic sign (21; 51; 61; 71); **characterized in that** said method further comprises the following steps performed by said electronic device (5): calculating coefficients (32; 72) of a two-dimensional spectral representation of said portion (26) of said image data;

    determining said coefficients (32; 72) of said two-dimensional spectral representation for Fourier space coordinates disposed along a line (33) in Fourier space (31), said line (33) having a selected direction in Fourier space (31); and

    establishing, based on said determined coefficients (32; 72) disposed along said line (33), whether said traffic sign (21; 51; 61; 71) has said at least one graphical feature (22) extending linearly on said traffic sign (21; 51; 61; 71), wherein a function (37; 54, 55; 65-67) in image space is calculated by transforming said determined coefficients (32; 72) disposed along said line (33) from Fourier space (31) to image space, in order to establish, based on whether the function (37; 54, 55; 65-67) in image space has pronounced changes, such as peaks or dips, whether said traffic sign (21; 51; 61; 71) has at least one graphical feature (22) extending linearly on said traffic sign (21; 51; 61; 71).

2.  The method of claim 1, wherein said direction of said line (33) in Fourier space (31) is selected based on a direction (23) along which said at least one graphical feature (22), if present, extends on said traffic sign (21; 51; 61; 71).

3.  The method of claim 2, wherein said at least one graphical feature (22), if present, extends linearly on said traffic sign (21; 51; 61; 71) in a direction having an angle (24) of $\alpha$ relative to a first direction in image space, and said line (33) in Fourier space (31) has an angle (34) of $\beta$ relative to a first direction in Fourier space, wherein said first direction in Fourier space represents spectral components associated with said first direction in image space, and wherein said direction of said line (33) in Fourier space (31) is selected such that $85° \leq |\beta-\alpha| \leq 95°$, in particular such that $88° \leq |\beta-\alpha| \leq 92°$, in particular such that $89° \leq |\beta-\alpha| \leq 91°$.

4.  The method of any one of the preceding claims, wherein a two-dimensional discrete cosine transform, a two-dimensional discrete sine transform or a two-dimensional discrete Fourier transform is performed on said portion of said image data to calculate said coefficients (32; 72) of said two-dimensional spectral representation.

5.  The method of any one of the preceding claims, wherein values of a Radon transformation of said portion of said image data, evaluated at positions along a line (25; 52, 53; 62-64) in image space, are estimated based on said determined coefficients (32; 72), in order to establish whether said traffic sign (21; 51; 61; 71) has said at least one graphical feature (22) extending linearly on said traffic sign (21; 51; 61; 71).

6.  The method of any one of the preceding claims, wherein said function (37; 54, 55; 65-67) in image space is calculated by performing a one-dimensional inverse discrete cosine transform, a one-dimensional inverse discrete sine transform or a one-dimensional inverse Fourier transform on said determined coefficients (32; 72).

7.  The method of any one of the preceding claims, wherein a threshold comparison is performed for said function (37; 54, 55; 65-67) in image space, in order to establish whether said traffic sign (21; 51; 61; 71) has at least one graphical feature (22) extending linearly on said traffic sign (21; 51; 61; 71).

8.  The method of any one of the preceding claims, further comprising:

    determining said coefficients of said two-dimensional spectral representation for Fourier space coordinates disposed along at least another line (35, 36) in Fourier space (31);
wherein said establishing whether said traffic sign (21; 51; 61; 71) has said at least one graphical feature (22) extending linearly on said traffic sign (21; 51; 61; 71) is performed based on said coefficients (32; 72) determined for Fourier space coordinates disposed along said line (33) in Fourier space (31) and based on said coefficients determined for Fourier space coordinates disposed along said at least another line (35, 36) in Fourier space (31).

9.  The method of any one of the preceding claims,
    wherein, based on said determined coefficients (32; 72), it is established whether said traffic sign (21; 51; 61; 71) is an end-of-restriction sign.

10. The method of any one of the preceding claims, further comprising:

    providing said portion (26) of said image data to at least one image recognition module for further classification of said traffic sign (21; 51; 61; 71), wherein said at least one image recognition module to which said portion (26) of said image data is provided is selected from a plurality of image recognition modules based on a result of said establishing whether said traffic sign (21; 51; 61; 71) has said at least one graphical feature (22) extending linearly on said traffic sign (21; 51; 61; 71).

11. A computer program product,
    having stored thereon instructions which, when executed by a processor (4) of an electronic device (2), direct the electronic device (2) to perform the method according to any one of the preceding claims.

12. A device for classifying a traffic sign (21; 51; 61; 71), comprising an input (3) configured to receive image data; and a processing device (4) coupled to said input (2) to receive said image data, said processing device being configured to

    - identify a portion (26) of said image data representing at least a portion of said traffic sign (21; 51; 61; 71);

    **characterized in that** said processing device (4) is further configured to

    - calculate coefficients (32; 72) of a two-dimensional spectral representation of said portion (26) of said image data;
    - determine said coefficients (32; 72) of said two-dimensional spectral representation for Fourier space coordinates disposed along a line (33) in Fourier space (31), said line (33) having a selected direction in Fourier space (31);
    - establish, based on said determined coefficients (32; 72) disposed along said line (33), whether said traffic sign (21; 51; 61; 71) has said at least one graphical feature (22) extending linearly on said traffic sign (21; 51; 61; 71), wherein the processing device (4) is configured to calculate a function (37; 54, 55; 65-67) in image space by transforming said determined coefficients (32; 72) disposed along said line (33) from Fourier space (31) to image space, in order to establish, based on whether the function (37; 54, 55; 65-67) in image space has pronounced changes, such as peaks or dips, whether said traffic sign (21; 51; 61; 71) has at least one graphical feature (22) extending linearly on said traffic sign (21; 51; 61; 71).

13. The device of claim 12,
    wherein the device (2) is configured to perform the method of any one of claims 1-10.

14. A driver assistance system for a vehicle, comprising
    the device (2) for recognizing a traffic sign (21; 51; 61; 71) according to claim 12 or claim 13.

**Patentansprüche**

1.  Verfahren zum Klassifizieren eines Verkehrszeichens (21; 51; 61; 71), wobei das Verfahren ein Bestimmen, ob das Verkehrszeichen (21; 51; 61; 71) wenigstens ein graphisches Merkmal (22), das sich linear auf dem Verkehrszeichen (21; 51; 61; 71) erstreckt, insbesondere eine oder mehrere Linien oder Streifen, die sich linear auf dem Verkehrszeichen (21; 51; 61; 71) erstrecken; aufweist, beinhaltet,
    wobei das Verfahren den folgenden Schritt umfasst, der von einer elektronischen Einrichtung (5) ausgeführt wird:

    Identifizieren eines Abschnitts (26) von Bilddaten, die wenigstens einen Abschnitt des Verkehrszeichens (21;

51; 61; 71) repräsentieren;

**dadurch gekennzeichnet, dass** das Verfahren weiterhin die folgenden Schritte umfasst, die von der elektronischen Einrichtung (5) ausgeführt werden:

Berechnen von Koeffizienten (32; 72) einer zweidimensionalen Spektraldarstellung des Abschnitts (26) der Bilddaten;

Ermitteln der Koeffizienten (32; 72) der zweidimensionalen Spektraldarstellung für Fourier-Raum-Koordinaten, die entlang einer Linie (33) im Fourier-Raum (31) angeordnet sind, wobei die Linie (33) eine ausgewählte Richtung im Fourier-Raum (31) aufweist; und

Bestimmen, basierend auf den ermittelten Koeffizienten (32; 72), die entlang der Linie (33) angeordnet sind, ob das Verkehrszeichen (21; 51; 61; 71) das wenigstens eine graphische Merkmal (22), das sich linear auf dem Verkehrszeichen (21; 51; 61; 71) erstreckt, aufweist,

wobei eine Funktion (37; 54; 55; 65-67) im Bildraum berechnet wird, indem die ermittelten Koeffizienten (32; 72), die entlang der Linie (33) angeordnet sind, vom Fourier-Raum (31) in den Bildraum transformiert werden, um abhängig davon, ob die Funktion (37; 54, 55; 65-67) im Bildraum ausgeprägte Änderungen, wie beispielsweise lokale Maxima oder Minima, aufweist, zu bestimmen, ob das Verkehrszeichen (21; 51; 61; 71) wenigstens ein graphisches Merkmal (22), das sich linear auf dem Verkehrszeichen (21; 51; 61; 71) erstreckt, aufweist.

2.  Verfahren nach Anspruch 1,
    wobei die Richtung der Linie (33) im Fourier-Raum (31) basierend auf einer Richtung (23) ausgewählt wird, entlang der sich das wenigstens eine graphische Merkmal (22), sofern es vorhanden ist, auf dem Verkehrszeichen (21; 51; 61; 71) erstreckt.

3.  Verfahren nach Anspruch 2,
    wobei das wenigstens eine graphische Merkmale (22), sofern es vorhanden ist, sich linear auf dem Verkehrszeichen (21; 51; 61; 71) in einer Richtung erstreckt, die einen Winkel (24) $\alpha$ relativ zu einer ersten Richtung im Bildraum aufweist, und wobei die Linie (33) im Fourier-Raum (31) einen Winkel (34) $\beta$ relativ zu einer ersten Richtung im Fourier-Raum aufweist, wobei die erste Richtung im Fourier-Raum Spektralkomponenten repräsentiert, die der ersten Richtung im Bildraum zugeordnet sind, und wobei die Richtung der Linie (33) im Fourier-Raum (31) so gewählt wird, dass $85° \leq |\beta-\alpha| < 95°$, insbesondere so, dass $88° \leq |\beta-\alpha| \leq 92°$, insbesondere so, dass $89° \leq |\beta-\alpha| \leq 91°$.

4.  Verfahren nach einem der vorhergehenden Ansprüche,
    wobei eine zweidimensionale diskrete Kosinustransformation, eine zweidimensionale diskrete Sinustransformation oder eine zweidimensionale diskrete Fourier-Transformation auf dem Abschnitt der Bilddaten ausgeführt wird, um die Koeffizienten (32; 72) der zweidimensionalen Spektraldarstellung zu berechnen.

5.  Verfahren nach einem der vorhergehenden Ansprüche,
    wobei Werte einer Radon-Transformation des Abschnitts der Bilddaten, ausgewertet an Positionen entlang einer Linie (25; 52, 53; 62-64) im Bildraum, basierend auf den ermittelten Koeffizienten (32; 72) abgeschätzt werden, um zu bestimmen, ob das Verkehrszeichen (21; 51; 61; 71) das wenigstens eine graphische Merkmal (22), das sich linear auf dem Verkehrszeichen (21; 51; 61; 71) erstreckt, aufweist.

6.  Verfahren nach einem der vorhergehenden Ansprüche,
    wobei die Funktion (37; 54, 55; 65-67) im Bildraum berechnet wird, indem eine eindimensionale inverse diskrete Kosinustransformation, eine eindimensionale inverse diskrete Sinustransformation oder eine eindimensionale inverse Fourier-Transformation für die ermittelten Koeffizienten (32; 72) berechnet wird.

7.  Verfahren nach einem der vorhergehenden Ansprüche,
    wobei ein Schwellenwertvergleich für die Funktion (37; 54, 55; 65-67) im Bildraum durchgeführt wird, um zu bestimmen, ob das Verkehrszeichen (21; 51; 61; 71) wenigstens ein graphisches Merkmal (22), das sich linear auf dem Verkehrszeichen (21; 51; 61; 71) erstreckt, aufweist.

8.  Verfahren nach einem der vorhergehenden Ansprüche, welches weiterhin umfasst:

    Ermitteln der Koeffizienten der zweidimensionalen Spektraldarstellung für Fourier-Raum-Koordinaten, die entlang wenigstens einer weiteren Linie (35, 36) im Fourier-Raum (31) angeordnet sind;
    wobei das Bestimmen, ob das Verkehrszeichen (21; 51; 61; 71) wenigstens ein graphisches Merkmal (22), das sich linear auf dem Verkehrszeichen (21; 51; 61; 71) erstreckt, aufweist, basierend auf den Koeffizienten (32;

72), die für Fourier-Raum-Koordinaten, die entlang der Linie (33) im Fourier-Raum angeordnet sind, ermittelt werden, und basierend auf den Koeffizienten, die für Fourier-Raum-Koordinaten, die entlang der wenigstens einen weiteren Linie (35, 36) im Fourier-Raum (31) angeordnet sind, ermittelt werden, ausgeführt wird.

9. Verfahren nach einem der vorhergehenden Ansprüche,
wobei basierend auf den ermittelten Koeffizienten (32; 72) bestimmt wird, ob das Verkehrszeichen (21; 51; 61; 71) ein ein Beschränkungsende anzeigendes Zeichen ist.

10. Verfahren nach einem der vorhergehenden Ansprüche, welches weiterhin umfasst:

Bereitstellen des Abschnitts (26) der Bilddaten an wenigstens ein Bilderkennungsmodul zur weiteren Klassifizierung des Verkehrszeichens (21; 51; 61; 71), wobei das wenigstens eine Bilderkennungsmodul, an das der Abschnitt (26) der Bilddaten bereitgestellt wird, aus einer Mehrzahl von Bilderkennungsmodulen basierend auf einem Ergebnis des Bestimmens, ob das Verkehrszeichen (21; 51; 61; 71) das wenigstens eine graphische Merkmal (22), das sich linear auf dem Verkehrszeichen (21; 51; 61; 71) erstreckt, aufweist, ausgewählt wird.

11. Computerprogrammprodukt
mit darauf gespeicherten Instruktionen, die bei Ausführung durch einen Prozessor (4) einer elektronischen Einrichtung (2) die elektronische Einrichtung (2) zur Durchführung des Verfahrens nach einem der vorhergehenden Ansprüche veranlassen.

12. Vorrichtung zum Klassifizieren eines Verkehrszeichens (21; 51; 61; 71), umfassend
einen Eingang (3), der eingerichtet ist, um Bilddaten zu empfangen; und eine Verarbeitungseinrichtung (4), die mit dem Eingang (2) gekoppelt ist, um die Bilddaten zu empfangen, wobei die Verarbeitungseinrichtung eingerichtet ist, um

- einen Abschnitt (26) der Bilddaten zu identifizieren, die wenigstens einen Abschnitt des Verkehrszeichens (21; 51; 61; 71) repräsentieren;

**dadurch gekennzeichnet, dass** die Verarbeitungseinrichtung (4) weiterhin eingerichtet ist, um

- Koeffizienten (32; 72) einer zweidimensionalen Spektraldarstellung des Abschnitts (26) der Bilddaten zu berechnen;
- die Koeffizienten (32; 72) der zweidimensionalen Spektraldarstellung für Fourier-Raum-Koordinaten, die entlang einer Linie (33) im Fourier-Raum (31) angeordnet sind, zu ermitteln, wobei die Linie (33) eine ausgewählte Richtung im Fourier-Raum (31) aufweist;
- zu bestimmen, basierend auf den ermittelten Koeffizienten (32; 72), die entlang der Linie (33) angeordnet sind, ob das Verkehrszeichen (21; 51; 61; 71) das wenigstens eine graphische Merkmal (22), das sich linear auf dem Verkehrszeichen (21; 51; 61; 71) erstreckt, aufweist, wobei die Verarbeitungseinrichtung (4) eingerichtet ist, um eine Funktion (37; 54, 55; 65-67) im Bildraum zu berechnen, indem die ermittelten Koeffizienten (32; 72), die entlang der Linie (33) angeordnet sind, vom Fourier-Raum (31) in den Bildraum transformiert werden, um abhängig davon, ob die Funktion (37; 54, 55; 65-67) im Bildraum ausgeprägte Änderungen, wie beispielsweise lokale Maxima oder Minima, aufweist, zu bestimmen, ob das Verkehrszeichen (21; 51; 61; 71) wenigstens ein graphisches Merkmal (22), das sich linear auf dem Verkehrszeichen (21; 51; 61; 71) erstreckt, aufweist.

13. Vorrichtung nach Anspruch 12, wobei die Vorrichtung (2) eingerichtet ist, um das Verfahren nach einem der Ansprüche 1-10 auszuführen.

14. Fahrerassistenzsystem für ein Fahrzeug, umfassend die Vorrichtung (2) zum Erkennen eines Verkehrszeichens (21; 51; 61; 71) nach Anspruch 12 oder Anspruch 13.

**Revendications**

1. Procédé de classification d'un panneau de signalisation routière (21; 51; 61; 71), ledit procédé incluant le fait d'établir si ledit panneau de signalisation routière (21; 51; 61; 71) comprend au moins un élément graphique (22) s'étendant de manière linéaire sur ledit panneau de signalisation routière (21; 51; 61; 71), en particulier une ou plusieurs lignes ou raies s'étendant de manière linéaire sur ledit panneau de signalisation routière (21; 51; 61; 71),

dans lequel ledit procédé comprend l'étape suivante, exécutée par un dispositif électronique (5):

d'identifier une portion (26) de données d'image représentant au moins une portion dudit panneau de signalisation routière (21; 51; 61; 71);

**caractérisé en ce que** ledit procédé comprend en outre les étapes suivantes, exécutées par ledit dispositif électronique (5):

de calculer des coefficients (32; 72) d'une représentation spectrale bidimensionnelle de ladite portion (26) desdites données d'image;

de déterminer lesdits coefficients (32; 72) de ladite représentation spectrale bidimensionnelle pour des coordonnées d'espace de Fourier disposées le long d'une ligne (33) dans un espace de Fourier (31), ladite ligne (33) ayant une direction sélectionnée dans un espace de Fourier (31); et d'établir, à base desdits coefficients déterminés (32; 72) disposés le long de ladite ligne (33), si ledit panneau de signalisation routière (21; 51; 61; 71) comprend au moins un élément graphique (22) s'étendant de manière linéaire sur ledit panneau de signalisation routière (21; 51; 61; 71), dans lequel une fonction (37; 54, 55; 65-67) dans un espace d'image est calculée par transformation desdits coefficients déterminés (32; 72) disposés le long de ladite ligne (33) d'un espace de Fourier (31) en espace d'image, pour établir, selon que la fonction (37; 54, 55; 65-67) dans l'espace d'image comprend des modifications prononcées, telles que des crêtes ou des creux, si ledit panneau de signalisation routière (21; 51; 61; 71) comprend au moins un élément graphique (22) s'étendant de manière linéaire sur ledit panneau de signalisation routière (21; 51; 61; 71).

**2.** Procédé selon la revendication 1, dans lequel ladite direction de ladite ligne (33) dans l'espace de Fourier (31) est sélectionnée à base d'une direction (23) le long de laquelle ledit au moins un élément graphique (22), si présent, s'étend sur ledit panneau de signalisation routière (21; 51; 61; 71).

**3.** Procédé selon la revendication 2, dans lequel ledit au moins un élément graphique (22), si présent, s'étend de manière linéaire sur ledit panneau de signalisation routière (21; 51; 61; 71) dans une direction faisant un angle (24) $\alpha$ avec une première direction dans l'espace d'image, et ladite ligne (33) dans l'espace de Fourier (31) fait un angle (34) $\beta$ avec une première direction dans l'espace de Fourier,
dans lequel ladite première direction dans l'espace de Fourier représente des composants spectraux associés à ladite première direction dans l'espace d'image, et
dans lequel ladite direction de ladite ligne (33) dans l'espace de Fourier (31) est sélectionnée de sorte que $85° \leq |\beta - \alpha| \leq 95°$, en particulier de sorte que $88° \leq |\beta-\alpha| \leq 92°$, en particulier en sorte que $89° \leq |\beta-\alpha| \leq 91°$.

**4.** Procédé selon l'une quelconque des revendications précédentes, dans lequel une transformée en cosinus discrète bidimensionnelle, une transformée en sinus discrète bidimensionnelle ou une transformée de Fourier discrète bidimensionnelle est exécutée sur ladite portion desdites données d'image pour calculer lesdits coefficients (32; 72) de ladite représentation spectrale bidimensionnelle.

**5.** Procédé selon l'une quelconque des revendications précédentes, dans lequel des valeurs d'une transformée de Radon de ladite portion desdites données d'image, évaluées à des positions le long d'une ligne (25; 52, 53; 62-64) dans l'espace d'image, sont estimées à base desdits coefficients déterminés (32; 72), pour établir si ledit panneau de signalisation routière (21; 51; 61; 71) comprend ledit au moins un élément graphique (22) s'étendant de manière linéaire sur ledit panneau de signalisation routière (21; 51; 61; 71).

**6.** Procédé selon l'une quelconque des revendications précédentes, dans lequel ladite fonction (37; 54, 55; 65-67) dans l'espace d'image est calculée en exécutant une transformée en cosinus discrète inverse unidimensionnelle, une transformée en sinus discrète inverse unidirectionnelle ou une transformée de Fourier inverse unidimensionnelle sur lesdits coefficients déterminés (32; 72).

**7.** Procédé selon l'une quelconque des revendications précédentes, dans lequel une comparaison de seuil est exécutée pour ladite fonction (37; 54, 55; 65-67) dans l'espace d'image, pour établir si ledit panneau de signalisation routière (21; 51; 61; 71) comprend au moins un élément graphique (22) s'étendant de manière linéaire sur ledit panneau de signalisation routière (21; 51; 61; 71).

**8.** Procédé selon l'une quelconque des revendications précédentes, comprenant en outre:

la détermination desdits coefficients de ladite représentation spectrale bidimensionnelle pour des coordonnées de l'espace de Fourier disposées le long d'au moins une autre ligne (35, 36) dans l'espace de Fourier (31);

dans lequel ledit établissement du fait si ledit panneau de signalisation routière (21; 51; 61; 71) comprend ledit au moins un élément graphique (22) s'étendant de manière linéaire sur ledit panneau de signalisation routière (21; 51; 61; 71) est exécuté à base desdits coefficients (32; 72) déterminés pour des coordonnées de l'espace de Fourier disposées le long de ladite ligne (33) dans l'espace de Fourier (31) et à base desdits coefficients déterminés pour des coordonnées de l'espace de Fourier disposées le long de ladite au moins autre ligne (35, 36) dans l'espace de Fourier (31).

9. Procédé selon l'une quelconque des revendications précédentes, dans lequel, à base desdits coefficients déterminés (32; 72), on établit si ledit panneau de signalisation routière (21; 51; 61; 71) est un tableau indicateur de fin de restriction.

10. Procédé selon l'une quelconque des revendications précédentes, comprenant en outre:

la fourniture de ladite portion (26) desdites données d'image à au moins un module de reconnaissance d'image pour une autre classification dudit panneau de signalisation routière (21; 51; 61; 71), ledit au moins un module de reconnaissance d'image auquel ladite portion (26) desdites données d'image est fournie étant sélectionné parmi une pluralité de modules de reconnaissance d'image à base d'un résultat dudit établissement si ledit panneau de signalisation routière (21; 51; 61; 71) comprend ledit au moins un élément graphique (22) s'étendant sur ledit panneau de signalisation routière (21; 51; 61; 71).

11. Produit programme d'ordinateur, sur lequel sont enregistrées des instructions qui, lorsqu'elles sont exécutées par un processeur (4) d'un dispositif électronique (2), chargent le dispositif électronique (2) d'exécuter le procédé selon l'une quelconque des revendications précédentes.

12. Dispositif pour classifier un panneau de signalisation routière (21; 51; 61; 71), comprenant une entrée (3) configurée pour recevoir des données d'image; et
un dispositif de traitement (4) couplé à ladite entrée (2) pour recevoir lesdites données d'image, ledit dispositif de traitement étant configuré pour

- identifier une portion (26) desdites données d'image représentant au moins une portion dudit panneau de signalisation routière (21; 51; 61; 71);

**caractérisé en ce que** ledit dispositif de traitement (4) est en outre configuré pour

- calculer des coefficients (32; 72) d'une représentation spectrale bidimensionnelle de ladite portion (26) desdites données d'image;
- déterminer lesdits coefficients (32; 72) de ladite représentation spectrale bidimensionnelle pour des coordonnées d'un espace de Fourier disposées le long d'une ligne (33) dans l'espace de Fourier (31), ladite ligne (33) ayant une direction sélectionnée dans l'espace de Fourier (31);
- établir, à base desdits coefficients déterminés (32; 72) disposés le long de ladite ligne (33), si ledit panneau de signalisation routière (21; 51; 61; 71) comprend ledit au moins un élément graphique (22) s'étendant de manière linéaire sur ledit panneau de signalisation routière (21; 51; 61; 71), le dispositif de traitement (4) étant configuré pour calculer une fonction (37; 54, 55; 65-67) dans l'espace d'image par transformation desdits coefficients déterminés (32; 72) disposés le long de ladite ligne (33) de l'espace de Fourier (31) en espace d'image, pour établir, selon que la fonction (37; 54, 55; 65-67) dans l'espace d'image comprend des modifications prononcées, telles que des crêtes ou des creux, si ledit panneau de signalisation routière (21; 51; 61; 71) comprend au moins élément graphique (22) s'étendant de manière linéaire sur ledit panneau de signalisation routière (21; 51; 61; 71).

13. Dispositif selon la revendication 12, dans lequel le dispositif (2) est configuré pour exécuter le procédé de l'une quelconque des revendications 1-10.

14. Système d'assistance conducteur pour un véhicule, comprenant le dispositif (2) pour reconnaître un panneau de signalisation routière (21; 51; 61; 71) selon la revendication 12 ou la revendication 13.

FIG. 1

FIG. 2A

FIG. 2B

$k_2$

32

31

33

34

β

$k_1$

**FIG. 3**

$k_2$

32

31

35

33

34

β

36

$k_1$

**FIG. 4**

f(X)

37

39

th

38

X

**FIG. 5**

41

RETRIEVE IMAGE DATA ― 42

IDENTIFY PORTION
REPRESENTING TRAFFIC SIGN ― 43

2D-TRANSFORM TO FOURIER
SPACE, E.G. USING DISCRETE
COSINE TRANSFORM (DCT) ― 44

DETERMINE COEFFICIENTS OF
SPECTRAL REPRESENTATION
ALONG A LINE ― 45

1D-TRANSFORM BACK TO
COORDINATE SPACE, E.G. USING
INVERSE DCT ― 46

SELECT OTHER LINE
IN FOURIER SPACE

48 ―

Y

IS VARIATION TO BE
DETERMINED ALONG
OTHER LINE? ― 47

N

ESTABLISH WHETHER TRAFFIC
SIGN HAS LINEARLY EXTENDING
FEATURE(S) ― 49

FIG. 6

**FIG. 7A**

**FIG. 7B**

**FIG. 7C**

EP 2 363 827 B1

FIG. 8A

FIG. 8B

**FIG. 9**

EP 2 363 827 B1

FIG. 10A

FIG. 10B

FIG. 10C

FIG. 11

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **R. ACH et al.** Classification of Traffic Signs in Real-Time on a Multi-Core Processor. *Intelligent Vehicles Symposium, 2008 IEEE, IEEE, Piscataway, NJ, USA,* 2008, 313-318
- Vision with Direction - A systematic Introduction to Image Processing and Computer Vision. **JOSEF BIGUN.** Linearly Symmetric Images. Springer-Verlag, 2006

- Image Processing Techniques for Automatic Road Sign Identification and Tracking. **ELISABET PÉREZ ; BAHRAM JAVIDI.** Image Recognition and Classification - Algorithms, Systems, and Applications. Marcel Dekker Inc, 2002, 403-426